(19) Europäisches Patentamt
European Patent Office
Office européen des brevets

(11) EP 3 469 744 B1

(12) # FASCICULE DE BREVET EUROPEEN

(45) Date de publication et mention de la délivrance du brevet:
**27.05.2020 Bulletin 2020/22**

(21) Numéro de dépôt: **17745779.3**

(22) Date de dépôt: **13.06.2017**

(51) Int Cl.:
***H04B 11/00*** $^{(2006.01)}$ ***H04L 9/00*** $^{(2006.01)}$

(86) Numéro de dépôt international:
**PCT/FR2017/051517**

(87) Numéro de publication internationale:
**WO 2017/216470 (21.12.2017 Gazette 2017/51)**

(54) **MÉTHODE DE CODAGE PAR SIGNAUX ACOUSTIQUES ALÉATOIRES ET MÉTHODE DE TRANSMISSION ASSOCIÉE**

VERFAHREN ZUR CODIERUNG DURCH ZUFÄLLIGE AKUSTISCHE SIGNALE UND ZUGEHÖRIGES ÜBERTRAGUNGSVERFAHREN

METHOD FOR CODING BY RANDOM ACOUSTIC SIGNALS AND ASSOCIATED TRANSMISSION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2016 FR 1655443**

(43) Date de publication de la demande:
**17.04.2019 Bulletin 2019/16**

(73) Titulaire: **CopSonic**
**82000 Montauban (FR)**

(72) Inventeurs:
- **ALVAREZ CANIZARES, David**
**La Habana (CU)**
- **MENDEZ FONSECA, Victor Manuel**
**La Habana (CU)**

(74) Mandataire: **Brevalex**
**56, Boulevard de l'Embouchure**
**B.P. 27519**
**31075 Toulouse Cedex 2 (FR)**

(56) Documents cités:
**US-A1- 2004 105 344**

- **NEVENA LAZIC AND PURHAM AARABI: "Communication over an acoustic channel using data hiding techniques", IEEE TRANSACTIONS ON MULTIMEDIA, IEEE SERVICE CENTER, PISCATAWAY, NJ, US, vol. 8, no. 5, 1 octobre 2006 (2006-10-01) , pages 918-924, XP009106139, ISSN: 1520-9210, DOI: 10.1109/TMM.2006.879880**
- **D. KIROVSKI ET AL: "Spread-spectrum watermarking of audio signals", IEEE TRANSACTIONS ON SIGNAL PROCESSING, vol. 51, no. 4, 1 avril 2003 (2003-04-01), pages 1020-1033, XP055199422, ISSN: 1053-587X, DOI: 10.1109/TSP.2003.809384**
- **ZHANG YING ET AL: "Channel Capacity Analysis of the Generalized Spread Spectrum Watermarking in Audio Signals", IEEE SIGNAL PROCESSING LETTERS, IEEE SERVICE CENTER, PISCATAWAY, NJ, US, vol. 22, no. 5, 1 mai 2015 (2015-05-01), pages 519-523, XP011562820, ISSN: 1070-9908, DOI: 10.1109/LSP.2014.2363655 [extrait le 2014-10-24]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention concerne de manière générale le domaine du codage ainsi que celui de la communication par signaux acoustiques, sonores, infrasonores ou ultrasonores.

### ÉTAT DE LA TECHNIQUE ANTÉRIEURE

Le codage d'information par signaux acoustiques a été largement utilisé dans le contexte de la transmission de données, notamment sur un canal vocal d'un système de téléphonie fixe. Par exemple, il est bien connu de transmettre des données alphanumériques au moyen de codes DTMF (Dual Tone Multi Frequency), chaque caractère alphanumérique correspondant à une paire de fréquences audibles transmises simultanément sur le canal vocal. On pourra trouver une description d'une méthode de codage DTMF dans le brevet US-B-6 751 303. Ce codage DTMF peut d'ailleurs être précédé d'un codage correcteur d'erreurs (codage canal) comme proposé dans la demande US-A-2004/008108078.
La méthode de codage DTMF n'offre cependant aucune protection contre les attaques d'un tiers qui tenterait d'intercepter les messages transmis. Une première solution pour garantir la confidentialité et l'intégrité des messages transmis sur le canal vocal serait de chiffrer les messages au moyen d'un algorithme de chiffrement à clé privée ou à clé publique, puis de transmettre les symboles des messages ainsi chiffrés au moyen de codes DTMF. A la réception, les symboles des messages ainsi chiffrés pourraient alors être obtenus à partir d'une batterie de filtres centrés sur les fréquences DTMF et le message en clair serait restitué par un algorithme de déchiffrement.
Toutefois, les algorithmes de chiffrement/ déchiffrement sont complexes à mettre en œuvre, ce d'autant que les clés de chiffrement utilisées sont longues pour se prémunir contre des attaques de cryptanalyse.
Le but de la présente invention est par conséquent de proposer une méthode de codage au moyen de signaux acoustiques qui garantisse un bon niveau de confidentialité des messages transmis, tout en étant particulièrement simple et robuste.

### EXPOSÉ DE L'INVENTION

La présente invention est définie par une méthode de codage de symboles d'information appartenant à un alphabet (A) au moyen de signaux acoustiques, caractérisée en ce que :

(a) on acquiert un ensemble de signaux aléatoires et on les filtre au moyen d'un filtre d'intérêt;
(b) on sélectionne des sous-ensembles ($S_N$) de $N$ signaux dudit ensemble et, pour chaque sous-ensemble, on calcule une matrice de corrélation des signaux ainsi sélectionnés;
(c) on retient comme dictionnaire de codage le sous-ensemble de $N$ signaux correspondant à la matrice de corrélation la plus proche d'une matrice diagonale ;
(d) on code chaque symbole d'information de l'alphabet par un signal aléatoire du dictionnaire, ledit signal aléatoire du dictionnaire étant transformé en signal acoustique au moyen d'un transducteur.

Avantageusement, on acquiert lesdits signaux aléatoires au moyen d'un générateur aléatoire utilisant un phénomène physique.
De préférence, à l'étape (c) :

(c1) on substitue successivement un nouveau signal aléatoire appartenant audit ensemble à l'un des signaux aléatoires ($\overline{s}_i$, $\tilde{s}_i$) d'un premier sous-ensemble de signaux sélectionné ;
(c2) on calcule pour chacun des sous-ensembles ainsi substitués la matrice de corrélation ($\mathbf{C}_{i\to k}$, $\mathbf{C}'_{i\to k}$) des signaux aléatoires et l'on en déduit un facteur de qualité ($Q_{i\to k}$, $Q'_{i\to k}$) caractérisant la proximité de la matrice de corrélation à une matrice diagonale ;

les étapes (c1) et (c2) étant répétées tant que l'on a pas épuisé des signaux aléatoires dudit ensemble et/ou le facteur de qualité est inférieur à une valeur de seuil prédéterminée ($Q_{Th}$, $Q'_{Th}$).
Selon un premier mode de réalisation, préalablement à l'étape (b), on soustrait à chaque signal aléatoire sa moyenne de manière à ce que lesdits signaux aléatoires soient centrés.

Le facteur de qualité peut être calculé au moyen de $Q'=\dfrac{\min\limits_{i}\left(\left|C'_{ii}\right|\right)}{\max\limits_{\substack{i,j\\i\neq j}}\left(\left|C'_{ij}\right|\right)}$ ou $Q'=\min\limits_{i}\left(\dfrac{\left|C'_{ii}\right|}{\max\limits_{j\neq i}\left(\left|C'_{ij}\right|\right)}\right)$ ou encore $Q'=\dfrac{\operatorname{moy}\limits_{i}\left(\left|C'_{ii}\right|\right)}{\operatorname{moy}\limits_{\substack{i,j\\i\neq j}}\left(\left|C'_{ij}\right|\right)}$ où les coefficients $C'_{ij}$ sont les éléments de la matrice de corrélation et où min, max et moy signifient respectivement la valeur minimale, la valeur maximale et la moyenne.

Selon un second mode de réalisation, préalablement à l'étape (b), on normalise l'énergie des signaux aléatoires centrés de manière à obtenir des signaux aléatoires normalisés possédant tous une même énergie moyenne par échantillon ($E_0$).

Le facteur de qualité peut être calculé au moyen de $Q=\dfrac{E_0}{\max\limits_{\substack{i,j\\i\neq j}}\left(\left|C_{ij}\right|\right)}$ ou $Q=\dfrac{E_0}{\operatorname{moy}\limits_{\substack{i,j\\i\neq j}}\left(\left|C_{ij}\right|\right)}$ ou encore $Q=\dfrac{E_0}{\sum\limits_{\substack{i,j\\i\neq j}}\left|C_{ij}\right|}$ où les coefficients $C_{ij}$ sont les éléments de la matrice de corrélation et $E_0$ est ladite énergie moyenne par échantillon des signaux aléatoires, où min, max et moy signifient respectivement la valeur minimale, la valeur maximale et la moyenne.

L'invention concerne en outre un méthode de transmission de symboles d'information appartenant à un alphabet (A) au moyen de signaux acoustiques, dans laquelle lesdits symboles sont codés au moyen de la méthode de codage définie précédemment, les signaux acoustiques correspondants à des symboles d'information successifs étant transmis séquentiellement sur le canal de transmission.

Alternativement, les signaux acoustiques correspondants à différents symboles d'information peuvent être transmis simultanément sur le canal de transmission.

Dans tous les cas, on peut effectuer un codage canal de blocs desdits symboles préalablement à leur codage par signaux acoustiques.

L'invention concerne enfin une méthode de réception de symboles d'information, dans laquelle le signal acoustique reçu pendant un temps symbole est transformé en signal électrique par un transducteur, puis corrélé avec chacun des signaux aléatoires du dictionnaire de codage pour fournir une pluralité de résultats de corrélation, le résultat de corrélation le plus élevé en valeur absolue fournissant l'indice d'un symbole reçu pendant ledit temps symbole.

Alternativement, le signal acoustique reçu pendant un temps symbole est transformé en signal électrique par un transducteur, puis corrélé avec chacun des signaux aléatoires du dictionnaire de codage pour fournir une pluralité de résultats de corrélation, les résultats de corrélation supérieurs, en valeur absolue, à une valeur de seuil prédéterminée fournissant les indices des symboles reçus pendant ledit temps symbole.

Optionnellement, le signal acoustique reçu pendant un temps symbole est transformé en signal électrique par un transducteur, puis corrélé avec chacun des signaux aléatoires du dictionnaire de codage pour fournir une pluralité de résultats de corrélation, les résultats de corrélation supérieurs, en valeur absolue, à une valeur de seuil prédéterminée fournissant les indices des symboles reçus pendant ledit temps symbole, les blocs de symboles reçus étant ensuite soumis à un décodage canal.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique une méthode de construction d'un dictionnaire de codage au moyen de signaux acoustiques aléatoires selon un premier mode de réalisation de l'invention ;

La Fig. 2 représente de manière schématique une méthode de construction d'un dictionnaire de codage au moyen de signaux acoustiques aléatoires selon un second mode de réalisation de l'invention ;

La Fig. 3 représente une matrice d'autocorrélation des signaux acoustiques aléatoires utilisés dans le codage de la Fig. 2 ;

La Fig. 4 représente de manière schématique une méthode de transmission de symboles d'information codés au moyen de signaux acoustiques aléatoires, selon un mode de réalisation de l'invention ;

La Fig. 5 représente de manière schématique une méthode de réception d'un signal acoustique aléatoire transmis par la méthode de transmission de la Fig. 4.

## EXPOSÉ DÉTAILLÉ DE MODES DE RÉALISATION PARTICULIERS

On considérera dans la suite un système d'émission / réception sur un canal acoustique. Par canal acoustique on entend un canal de propagation d'une onde sonore (dans le domaine des fréquences audibles 20Hz-20kHz), voire d'une onde ultrasonore (c'est-à-dire de fréquence au-delà de 20 kHz) ou d'une onde infrasonore (c'est-à-dire de fréquence en deçà de 20Hz).

Le message à coder, et le cas échéant à transmettre, est constitué de symboles d'information appartenant à un alphabet prédéterminé. Cet alphabet est constitué par exemple par un ensemble de mots de *n* bits, où *n* > 1. De manière générale, pour un alphabet A de cardinal *N,* on pourra toujours se ramener à un ensemble de mots binaires de taille $n=\lceil \log_2(N) \rceil$.

L'idée à la base de l'invention est de construire de manière heuristique un codage des symboles de l'alphabet *A* par des signaux acoustiques aléatoires. Plus précisément, en supposant que l'on a généré un ensemble S de cardinal $M \gg N$ de signaux aléatoires, l'idée à la base de l'invention est de sélectionner un sous-ensemble $S_A \subset S$ de ces *M* signaux aléatoires, respectant un certain critère de qualité, et d'associer de manière biunivoque à chaque symbole de l'alphabet *A* l'un des signaux aléatoires ainsi sélectionnés. L'injection de *A* dans *S* ainsi obtenue définit alors un codage par signaux aléatoires qui sont ensuite reproduits par un transducteur électroacoustique, d'où la qualification de codage acoustique aléatoire.

La Fig. 1 représente de manière schématique une méthode de construction d'un dictionnaire de codage au moyen de signaux acoustiques aléatoires, selon un premier mode de réalisation de l'invention.

Selon une première variante, la construction du dictionnaire de codage (*codebook*) est réalisée de manière séquentielle, par itérations successives. Alternativement, la construction du dictionnaire de codage pourra être réalisée de manière parallèle comme expliqué plus loin.

A l'étape 110, on acquiert un ensemble de signaux acoustiques aléatoires. Ces signaux ont été obtenus par exemple au moyen d'un générateur aléatoire utilisant un phénomène physique comme le bruit thermique aux bornes d'une résistance ou le bruit de souffle d'un microphone. Ces signaux sont acquis au moyen d'une chaine d'acquisition présentant une bande passante prédéterminée, puis échantillonnés à la fréquence de Nyquist correspondante. Alternativement, les signaux aléatoires peuvent avoir été obtenus par un générateur pseudo-aléatoire, avantageusement choisi de qualité cryptographique. Dans la suite, il est expressément convenu que l'expression « signaux aléatoires » couvre ces deux alternatives. Quoi qu'il en soit, chaque signal aléatoire est ainsi constitué de L échantillons, et stocké dans une mémoire.

A l'étape 120, on filtre optionnellement les signaux aléatoires avec un filtre présentant un gabarit d'intérêt, par exemple un filtre ayant pour réponse la réponse du canal de transmission. La réponse du canal de transmission est constituée par la convolution de la réponse de la chaine d'amplification, de la réponse du transducteur d'émission (haut-parleur, transducteur piézo-électrique ou autre), de la réponse du canal de propagation, de la réponse du transducteur de réception (microphone, transducteur piézo-électrique ou autre) et enfin de la réponse de la chaine de réception.

A l'étape 130, on centre et normalise chacun des signaux aléatoires, le cas échéant filtrés à l'étape 120, de manière à obtenir un ensemble *S* de signaux acoustiques aléatoires centrés de même énergie *E* . Plus précisément, si l'on note $s_i = (s_i(1),....s_i(L))$ un signal acoustique aléatoire généré précédemment, le signal centralisé et normalisé correspondant est donné par $\overline{s}_i = (\overline{s}_i(1),....\overline{s}_i(L))$ avec:

$$\overline{s}_i(\ell) = \frac{\sqrt{E_0}}{\sqrt{\sum_{\ell=1}^{L}\left(s_i(\ell)-\mu s_i\right)^2}}\left(s_i(\ell)-\mu s_i\right) \qquad (1)$$

où $\mu s_i = \frac{1}{L}\sum_{\ell=1}^{L} s_i(\ell)$ est la moyenne du signal $s_i$ et $E_0 = E/L$ est l'énergie moyenne par échantillon des signaux aléatoires.

A l'étape 140, on sélectionne arbitrairement un sous-ensemble $S_N$ de $S$ constitué par $N$ signaux aléatoires centrés et normalisés $\overline{s}_i$, $i$ = 1,..., $N$ et l'on calcule la matrice de corrélation de ces signaux. La matrice de corrélation est une matrice symétrique de taille $N \times N$ dont les éléments sont les coefficients de corrélation :

$$C_{ij} = \sum_{\ell=1}^{L} \overline{s}_i(\ell)\overline{s}_j(\ell) \qquad (2)$$

et dont les éléments diagonaux sont tous égaux à $E_0$.

Dans la suite, on appellera facteur de qualité de la matrice de corrélation, ou de manière équivalente facteur de qualité de l'ensemble $S_N$, la valeur :

$$Q = \frac{E_0}{\max\limits_{\substack{i,j \\ i \neq j}}\left(\left|C_{ij}\right|\right)} \qquad (3)$$

ou, alternativement :

$$Q = \frac{E_0}{\underset{\substack{i,j \\ i \neq j}}{\text{moy}}\left(\left|C_{ij}\right|\right)} \qquad (4)$$

où $\underset{\substack{i,j \\ i \neq j}}{\text{moy}}\left(\left|C_{ij}\right|\right) = \frac{2}{N(N-1)} \sum_{\substack{i,j=1,\ldots,N \\ i<j}} \left|C_{ij}\right|$ est la moyenne des valeurs absolues des éléments hors diagonale de la matrice de corrélation (tenant compte que la matrice est symétrique).

Encore alternativement, le facteur de qualité peut être défini par:

$$Q = \frac{E_0}{\sum\limits_{\substack{i,j \\ i \neq j}} \left|C_{ij}\right|} \qquad (5)$$

De manière générale, la matrice de corrélation **C** est caractérisée par un facteur de qualité $Q$ traduisant sa proximité à une matrice diagonale, le facteur de qualité étant d'autant plus élevé que les éléments non diagonaux de la matrice sont plus faibles par rapport aux éléments diagonaux.

On entre ensuite dans une boucle itérative en 150.

A l'étape 150, on prend en compte un nouveau signal aléatoire centré et normalisé $\overline{s}_k$ de $S$, non encore considéré, par conséquent $\overline{s}_k \notin S_N$.

A l'étape 160, on calcule les matrices de corrélation $\mathbf{C}_{i \to k}$, $i$ = 1,..., $N$, de taille $N \times N$, des signaux aléatoires $\overline{s}_1,\ldots,\overline{s}_{i-1},\overline{s}_k,\overline{s}_{i+1},\ldots,\overline{s}_N$. Autrement dit, on substitue successivement chacun des $N$ signaux de $S_N$ par le signal $\overline{s}_k$ et l'on calcule à chaque fois la matrice de corrélation des signaux après cette substitution.

On notera que le calcul de la matrice $\mathbf{C}_{i \to k}$ ne requiert que le calcul de $N$ - 1 coefficients de corrélation selon l'expression (2) à savoir du signal $\overline{s}_k$ avec les signaux $\overline{s}_1,\ldots,\overline{s}_{i-1},\overline{s}_k,\overline{s}_{i+1},\ldots,\overline{s}_N$, les autres coefficients ayant été précédemment calculés.

On détermine ensuite le facteur de qualité $Q_{i \to k}$ pour chacune des matrices $\mathbf{C}_{i \to k}$ , $i$ = 1,..., $N$, selon l'une des expressions (3) à (5) et l'on en déduit :

$$Q_k^{\max} = \max_{i=1,..,N} \left( Q_{i \to k} \right) \qquad (6)$$

En 170, on teste si $Q_k^{\max}$ est supérieur à la valeur $Q$ , autrement dit s'il existe une substitution $\bar{s}_i$ par $\bar{s}_k$ permettant d'améliorer le facteur de qualité de l'ensemble $S_N$. Dans la négative, on passe à l'étape 185 pour tester un critère d'arrêt. Dans l'affirmative, on passe à l'étape 180.

A l'étape 180, on substitue dans l'ensemble $S_N$, le signal $\bar{s}_h$ avec $h = \arg\max_i \left( Q_{i \to k} \right)$ par le signal $\bar{s}_k$ et l'on met à jour le facteur de qualité : $Q = Q_k^{\max}$ .

A l'étape 185, on teste un critère d'arrêt. Si le critère d'arrêt est satisfait, la construction du code se termine en 190. A défaut, on prend en compte un nouveau signal acoustique aléatoire en 150.

Un premier critère d'arrêt peut être l'épuisement de l'ensemble $S$ .

Alternativement ou cumulativement, un second critère d'arrêt peut être l'obtention d'un facteur de qualité supérieur à une valeur de seuil prédéterminée $Q_{th}$.

La boucle 150-185 est répétée tant que l'on n'a pas épuisé les signaux de $S$ (premier critère d'arrêt) ou obtenu un facteur de qualité supérieur à la valeur de seuil (second critère d'arrêt).

Ainsi, on construit progressivement un ensemble $S_N$ de signaux acoustiques aléatoires présentant entre eux un faible niveau de corrélation.

Au lieu de procéder de manière itérative, on pourra procéder de manière parallèle. Dans ce cas, on considère d'emblée toutes les combinaisons possibles de $N$ signaux aléatoires de $S$ et l'on calcule pour chacune de ces combinaisons le facteur de qualité de leur matrice de corrélation. On sélectionne enfin la combinaison conduisant au facteur de qualité le plus élevé. L'ensemble $S_N$ des signaux aléatoires résultant constitue le dictionnaire de codage.

La Fig. 2 représente de manière schématique une méthode de construction d'un dictionnaire de codage au moyen de signaux acoustiques aléatoires selon un second mode de réalisation de l'invention.

Les étapes 210 et 220 d'acquisition et de filtrage d'un ensemble de signaux aléatoires sont identiques aux étapes 110 et 120 de la Fig. 1 et ne seront donc pas décrites à nouveau.

A l'étape 230, on soustrait à chaque signal sa moyenne de manière à obtenir un ensemble de signaux aléatoires centrés, $\tilde{s}_i$. Toutefois, à la différence du premier mode de réalisation, les signaux aléatoires ne sont pas ici normalisés en énergie. Optionnellement, on pourra toutefois éliminer les signaux d'énergie inférieure à un seuil $E_{Th}$ prédéterminé. On obtient en définitive un ensemble S de signaux aléatoires.

A l'étape 240, on sélectionne arbitrairement un sous-ensemble $S_N$ de $S$ constitué par $N$ signaux aléatoires centrés $\tilde{s}_i$, $i$ = 1,..., $N$ et l'on calcule la matrice de corrélation de ces signaux. Les éléments de cette matrice de corrélation sont donnés par :

$$C'_{ij} = \sum_{\ell=1}^{L} \tilde{s}_i(\ell)\tilde{s}_j(\ell) \qquad (7)$$

A la différence du premier mode de réalisation, les éléments de la diagonale ne sont pas identiques. On calcule ensuite le facteur de qualité de la matrice de corrélation, c'est-à-dire, de manière équivalente, le facteur de qualité de l'ensemble $S_N$.

Dans ce mode de réalisation, le facteur de qualité peut être calculé comme suit:

$$Q' = \frac{\min_i \left( \left| C'_{ii} \right| \right)}{\max_{\substack{i,j \\ i \neq j}} \left( \left| C'_{ij} \right| \right)} \qquad (8)$$

ou, alternativement :

$$Q' = \min_i \left( \frac{|C'_{ii}|}{\max_{j \neq i} (|C'_{ij}|)} \right) \quad (9)$$

voire encore :

$$Q' = \frac{\underset{i}{\text{moy}} (|C'_{ii}|)}{\underset{\substack{i,j \\ i \neq j}}{\text{moy}} (|C'_{ij}|)} \quad (10)$$

Comme dans le premier mode de réalisation, le facteur de qualité *Q'* traduit la proximité de la matrice de corrélation à une matrice diagonale.

On entre ensuite dans une boucle itérative, les étapes 250 à 285 étant identiques aux étapes 150 à 185 précédemment décrites à la différence près que le facteur de qualité, *Q'*, est calculé à l'aide de l'une des expressions (7) à (9).

Lorsque le critère d'arrêt est satisfait, c'est-à-dire lorsque l'ensemble *S* est épuisé ou lorsque l'on a trouvé, par substitutions successives, un sous-ensemble $S_N$ dont le facteur de qualité est inférieur à une valeur de seuil prédéterminée $Q'_{Th}$, le sous-ensemble $S_N$ résultant est le dictionnaire de codage recherché.

La Fig. 3 représente les éléments d'une matrice de corrélation des signaux acoustiques aléatoires d'un dictionnaire de codage construit selon la méthode de la Fig. 2. Plus précisément, on a représenté ici les valeurs absolues $|C'_{ij}|$ des coefficients de corrélation des signaux acoustiques aléatoires du dictionnaire $S_N$, avec $N$ = 256. On remarque que les coefficients de corrélation de la diagonale principale, c'est-à-dire les énergies des différents signaux aléatoires, sont sensiblement plus élevés que les coefficients de corrélation hors diagonale.

La Fig. 4 représente de manière schématique une méthode de transmission de symboles d'information au moyen de signaux acoustiques aléatoires, selon un mode de réalisation de l'invention.

On suppose que l'on a préalablement généré un dictionnaire de codage selon la méthode de la Fig. 1 ou de la Fig. 2, autrement dit que l'on dispose d'un ensemble $S_N$ de signaux acoustiques aléatoires.

Les mots à transmettre sont optionnellement codés en 410 au moyen d'un codage canal, par exemple un codage par bloc de type BCH ou Reed-Solomon. Le cas échéant, on pourra également y ajouter un code CRC, de manière connue en soi. Les blocs ainsi codés par le codage canal et/ou codage CRC sont ensuite découpés en mots de taille *n* et par conséquent des symboles d'un alphabet *A* de cardinal $N = 2^n$.

A chaque mot de *n* bits, $x_1^j \ldots x_n^j$, on lit en 420 dans la mémoire 430, le signal aléatoire de $S_N$ qui lui est associé de manière biunivoque. Ce signal est ensuite converti en un signal analogique en 440 puis amplifié en 450 avant d'être émis par un transducteur en 460 (haut-parleur ou transducteur piézo-électrique par exemple).

Ainsi, une séquence de mots à transmettre est transformée en un signal acoustique constitué par une séquence de signaux acoustiques aléatoires de $S_N$.

Alternativement, plusieurs mots, autrement dit plusieurs symboles de l'alphabet A, pourront être transmis simultanément sur le canal de transmission. Dans ce cas, le signal acoustique transmis pendant une période mot sera simplement constitué par la somme des signaux acoustiques aléatoires associés à ces différents mots.

La Fig. 5 représente de manière schématique une méthode de réception d'un signal acoustique transmis par la méthode de transmission de la Fig. 4.

Le signal acoustique reçu par le transducteur 510 est converti en un signal électrique qui, le cas échéant, est amplifié (étape non représentée) puis échantillonné en 520 à la fréquence de Nyquist. La séquence d'échantillons ainsi obtenue est corrélée dans une batterie de corrélateurs en parallèle $530_1,...,530_N$ avec les signaux aléatoires de base $\bar{s}_i$, $i$ = 1,..., $N$ (ou $\tilde{s}_i$, $i$ = 1,..., $N$ dans le second mode de réalisation) du dictionnaire $S_N$.

Les corrélateurs peuvent être réalisés par exemple sous la forme de filtres adaptés aux signaux aléatoires de base $\bar{s}_i$, $i$ = 1,..., $N$ (ou $\tilde{s}_i$, $i$ = 1,..., $N$ dans le second mode de réalisation).

On supposera d'abord que la transmission a lieu de manière séquentielle et que les corrélateurs sont synchronisés avec les transitions entre mots successifs. On pourra notamment prévoir de transmettre une séquence pilote en préambule (par exemple un entête de trame) en préambule de la charge utile, permettant aux corrélateurs de se synchroniser avec la cadence mot $1/T$.

Les résultats de corrélation en sortie des différents corrélateurs sont comparés entre eux en 540, au terme de chaque période *T.* L'indice *i* du signal $\overline{s}_i$ ($\tilde{s}_i$) correspondant au résultat de corrélation le plus élevé en valeur absolue donne l'indice du symbole de l'alphabet *A* qui a été transmis. En pratique, l'indice *i* est utilisé en 550 comme élément d'adresse pour lire une mémoire 560 dans laquelle sont stockés les mots $x_1^i \dots x_n^i$ de l'alphabet A.

Le mot de *n* bits lu à cette adresse, $\hat{x}_1^i \dots \hat{x}_n^i$, est fourni à un décodeur canal 570. Le décodeur canal concatène les mots consécutifs pour former des blocs et effectue un décodage canal de ces blocs. L'homme du métier comprendra que le décodage canal permettra de corriger certaines erreurs pouvant affecter les blocs transmis et que le calcul du CRC permettra de déterminer si ces blocs ont été correctement décodés.

Selon une variante, plusieurs mots peuvent être transmis simultanément sur le canal de transmission. Dans ce cas, les résultats de corrélation ne sont pas comparés entre eux (en valeur absolue) mais à une valeur de seuil prédéterminée. Les sorties des corrélateurs donnent alors les indices des mots de l'alphabet *A* qui ont été transmis. De la même façon, après concaténation des mots en blocs, un décodage canal des blocs peut ensuite être effectué.

De nombreuses autres variantes pourront être envisagées par l'homme du métier sans sortir du cadre de la présente invention. Par exemple, au niveau de l'émission, on pourra prévoir que les signaux aléatoires soient utilisés pour moduler une porteuse ou une pluralité de sous-porteuses avant l'étape d'amplification. De manière symétrique, le signal reçu par le transducteur acoustique pourra subir une démodulation correspondante avant d'être corrélé par la batterie de corrélateurs.

Du fait de la nature aléatoire des signaux acoustiques, il est difficile pour un tiers écoutant le canal de les décoder pour obtenir les symboles d'information transmis. En outre, on pourra prévoir une pluralité d'ensembles $S_N$ à l'émission et à la réception, ces ensembles étant utilisés selon une séquence prédéterminée. Alternativement, la commutation d'un ensemble $S_N$ à un autre pourra être commandée par un mot de contrôle transmis sur le canal acoustique ou bien sur un canal auxiliaire.

## Revendications

1. Méthode de codage de symboles d'information appartenant à un alphabet (A) au moyen de signaux acoustiques, comportant les étapes suivantes:

   (a) on acquiert un ensemble de signaux aléatoires et on les filtre au moyen d'un filtre d'intérêt (110-120; 210-220) ayant pour réponse la réponse du canal de transmission sur lequel ces signaux sont destinés à être transmis;
   (b) on sélectionne (150, 250) des sous-ensembles ($S_N$) de *N* signaux aléatoires ainsi filtrés dudit ensemble, et pour chaque sous-ensemble, on calcule (160, 260) une matrice de corrélation des signaux ainsi sélectionnés ;
   (c) on retient comme dictionnaire de codage le sous-ensemble de *N* signaux correspondant à la matrice de corrélation la plus proche d'une matrice diagonale (170-180,270-280) ;
   (d) on code chaque symbole d'information de l'alphabet par un signal aléatoire du dictionnaire, ledit signal aléatoire du dictionnaire étant transformé en signal acoustique au moyen d'un transducteur.

2. Méthode de codage selon la revendication 1, **caractérisée en ce que** l'on acquiert lesdits signaux aléatoires au moyen d'un générateur aléatoire utilisant un phénomène physique.

3. Méthode de codage selon la revendication 1 ou 2, **caractérisée en ce qu'**à l'étape (c) :

   (c1) on substitue successivement un nouveau signal aléatoire (150, 250) appartenant audit ensemble à l'un des signaux aléatoires ($\overline{s}_i$, $\tilde{s}_i$) d'un premier sous-ensemble de signaux sélectionné ;
   (c2) on calcule (160, 260) pour chacun des sous-ensembles ainsi substitués la matrice de corrélation ($\mathbf{C}_{i \to k}$, $\mathbf{C'}_{i \to k}$) des signaux aléatoires et l'on en déduit un facteur de qualité ($Q_{i \to k}$, $Q'_{i \to k}$) caractérisant la proximité de la matrice de corrélation à une matrice diagonale ;
   les étapes (c1) et (c2) étant répétées tant que l'on a pas épuisé des signaux aléatoires dudit ensemble et/ou le facteur de qualité est inférieur à une valeur de seuil prédéterminée ($Q_{Th}$, $Q'_{Th}$).

4. Méthode de codage selon la revendication 1, **caractérisée en ce que**, préalablement à l'étape (b), on soustrait à chaque signal aléatoire sa moyenne de manière à ce que lesdits signaux aléatoires soient centrés.

5. Méthode de codage selon la revendication 4, **caractérisée en ce que** le facteur de qualité est calculé au moyen de $Q'=\frac{\min\limits_{i}\left(\left|C'_{ii}\right|\right)}{\max\limits_{\substack{i,j\\ i\neq j}}\left(\left|C'_{ij}\right|\right)}$ ou $Q'=\min\limits_{i}\left(\frac{\left|C'_{ii}\right|}{\max\limits_{j\neq i}\left(\left|C'_{ij}\right|\right)}\right)$ ou encore $Q'=\frac{\operatorname{moy}\limits_{i}\left(\left|C'_{ii}\right|\right)}{\operatorname{moy}\limits_{\substack{i,j\\ i\neq j}}\left(\left|C'_{ij}\right|\right)}$ où les coefficients $C'_{ij}$ sont les éléments de la matrice de corrélation et où min, max et moy signifient respectivement la valeur minimale, la valeur maximale et la valeur moyenne.

6. Méthode de codage selon la revendication 4, **caractérisée en ce que**, préalablement à l'étape (b), on normalise l'énergie des signaux aléatoires centrés de manière à obtenir des signaux aléatoires normalisés possédant tous une même énergie moyenne par échantillon ($E_0$).

7. Méthode de codage selon la revendication 6, **caractérisée en ce que** le facteur de qualité est calculé au moyen de $Q=\frac{E_0}{\max\limits_{\substack{i,j\\ i\neq j}}\left(\left|C_{ij}\right|\right)}$ ou $Q=\frac{E_0}{\operatorname{moy}\limits_{\substack{i,j\\ i\neq j}}\left(\left|C_{ij}\right|\right)}$ ou encore $Q=\frac{E_0}{\sum\limits_{\substack{i,j\\ i\neq j}}\left|C_{ij}\right|}$ où les coefficients $C_{ij}$ sont les éléments de la matrice de corrélation et $E_0$ est ladite énergie moyenne par échantillon des signaux aléatoires et où min, max et moy signifient respectivement la valeur minimale, la valeur maximale et la valeur moyenne.

8. Méthode de transmission de symboles d'information appartenant à un alphabet (A) au moyen de signaux acoustiques, **caractérisée en ce que** lesdits symboles sont codés au moyen de la méthode de codage par signaux acoustiques selon l'une des revendications 1 à 7, les signaux acoustiques correspondants à des symboles d'information successifs étant transmis séquentiellement sur le canal de transmission.

9. Méthode de transmission de symboles d'information appartenant à un alphabet (A) au moyen de signaux acoustiques, **caractérisée en ce que** lesdits symboles sont codés au moyen de la méthode de codage selon l'une des revendications 1 à 7, une pluralité de signaux acoustiques correspondants à différents symboles d'information étant transmis simultanément sur le canal de transmission.

10. Méthode de transmission de symboles d'information selon la revendication 8 ou 9, **caractérisée en ce que** l'on effectue un codage canal de blocs desdits symboles préalablement à leur codage par signaux acoustiques.

11. Méthode de réception de symboles d'information transmis par la méthode de transmission de la revendication 8, **caractérisée en ce que** le signal acoustique reçu pendant un temps symbole est transformé en signal électrique par un transducteur, puis corrélé avec chacun des signaux aléatoires du dictionnaire de codage pour fournir une pluralité de résultats de corrélation, le résultat de corrélation le plus élevé en valeur absolue fournissant l'indice d'un symbole reçu pendant ledit temps symbole.

12. Méthode de réception de symboles d'information transmis par la méthode de transmission de la revendication 9, **caractérisée en ce que** le signal acoustique reçu pendant un temps symbole est transformé en signal électrique par un transducteur, puis corrélé avec chacun des signaux aléatoires du dictionnaire de codage pour fournir une pluralité de résultats de corrélation, les résultats de corrélation supérieurs, en valeur absolue, à une valeur de seuil prédéterminée fournissant les indices des symboles reçus pendant ledit temps symbole.

13. Méthode de réception de symboles d'information transmis par la méthode de transmission de la revendication 10, **caractérisée en ce que** le signal acoustique reçu pendant un temps symbole est transformé en signal électrique par un transducteur, puis corrélé avec chacun des signaux aléatoires du dictionnaire de codage pour fournir une pluralité de résultats de corrélation, les résultats de corrélation supérieurs, en valeur absolue, à une valeur de seuil prédéterminée fournissant les indices des symboles reçus pendant ledit temps symbole, les blocs de symboles reçus étant ensuite soumis à un décodage canal.

## Patentansprüche

1. Verfahren zum Codieren von zu einem Alphabet (A) gehörenden Informationssymbolen mittels akustischer Signale, das die folgenden Schritte umfasst:

   (a) Erfassen einer Menge von Zufallssignalen und Filtern mit Hilfe eines Filters von Interesse (110 - 120; 210 - 220), das als Antwort die Antwort des Übertragungskanals hat, auf dem diese Signale übertragen werden sollen;
   (b) Auswählen (150, 250) von Untermengen ($S_N$) von $N$ so gefilterten Zufallssignalen der genannten Menge, und Berechnen (160, 260) einer Korrelationsmatrix der so ausgewählten Signale für jede Untermenge;
   (c) Festlegen der Untermenge von $N$ Signalen, die der einer Diagonalmatrix (170 - 180, 270 - 280) am nächsten liegenden Korrelationsmatrix entspricht, als Codierungsverzeichnis;
   (d) Codieren eines jeden Informationssymbols des Alphabets durch ein Zufallssignal des Verzeichnisses, wobei das Zufallssignal des Verzeichnisses mit Hilfe eines Wandlers in ein akustisches Signal umgewandelt wird.

2. Codierungsverfahren nach Anspruch 1,
**dadurch gekennzeichnet, dass**
die Zufallssignale mit Hilfe eines Zufallsgenerators unter Verwendung eines physikalischen Phänomens erfasst werden.

3. Codierungsverfahren nach Anspruch 1 oder 2,
**dadurch gekennzeichnet, dass** in Schritt (c)

   (c1) ein neues Zufallssignal (150, 250), das zu dieser Menge gehört, nacheinander durch eines der Zufallssignale ($\overline{S}_i$, $\tilde{S}_i$) einer ersten ausgewählten Untermenge von Signalen ersetzt wird;
   (c2) für jede der so ersetzten Untermengen die Korrelationsmatrix ($\mathbf{C}_{i\to k}$, $\mathbf{C'}_{i\to k}$) der Zufallssignale berechnet wird (160, 260) und ein Qualitätsfaktor ($Q_{i\to k}$, $Q'_{i\to k}$) abgeleitet wird, der die Nähe der Korrelationsmatrix zu einer Diagonalmatrix charakterisiert;
   wobei die Schritte (c1) und (c2) so lange wiederholt werden, bis die Zufallssignale der genannten Menge ausgeschöpft sind und/oder der Qualitätsfaktor unter einem vorgegebenen Schwellenwert ($Q_{Th}$, $Q'_{Th}$) liegt.

4. Codierungsverfahren nach Anspruch 1,
**dadurch gekennzeichnet, dass**
vor dem Schritt (b) von jedem Zufallssignal sein Mittelwert subtrahiert wird, so dass die genannten Zufallssignale zentriert werden.

5. Codierungsverfahren nach Anspruch 4,
**dadurch gekennzeichnet, dass**
der Qualitätsfaktor berechnet wird durch
$$Q' = \frac{\min_i\left(\left|C'_{ii}\right|\right)}{\max_{\substack{i,j \\ i\neq j}}\left(\left|C'_{ij}\right|\right)}$$
oder durch
$$Q' = \min_i\left(\frac{\left|C'_{ii}\right|}{\max_{j\neq i}\left(\left|C'_{ij}\right|\right)}\right)$$
oder auch durch
$$Q' = \frac{\operatorname{moy}_i\left(\left|C'_{ii}\right|\right)}{\operatorname{moy}_{\substack{i,j \\ i\neq j}}\left(\left|C'_{ij}\right|\right)}$$
wobei die Koeffizienten $C'_{ij}$ die Elemente der Korrelationsmatrix sind und wobei min, max und moy den Minimalwert, den Maximalwert bzw. den Durchschnittswert angeben.

6. Codierungsverfahren nach Anspruch 4,
**dadurch gekennzeichnet, dass**
vor Schritt (b) die Energie der zentrierten Zufallssignale normiert wird, um normierte Zufallssignale zu erhalten, die alle die gleiche durchschnittliche Energie pro Abtastung ($E_0$) besitzen.

**7.** Codierungsverfahren nach Anspruch 6,

**dadurch gekennzeichnet, dass** der Qualitätsfaktor berechnet wird durch $$Q = \frac{E_0}{\max\limits_{\substack{i,j \\ i \neq j}} \left( \left| C_{ij} \right| \right)}$$ oder durch $$Q = \frac{E_0}{\operatorname{moy}\limits_{\substack{i,j \\ i \neq j}} \left( \left| C_{ij} \right| \right)}$$ oder auch durch $$Q = \frac{E_0}{\sum\limits_{\substack{i,j \\ i \neq j}} \left| C_{ij} \right|}$$ wobei die Koeffizienten $C'_{ij}$ die Elemente der Korrelationsmatrix sind und $E_0$ die durchschnittliche Energie pro Abtastung der Zufallssignale ist und wobei min, max und moy den Minimalwert, den Maximalwert bzw. den Durchschnittswert angeben.

**8.** Verfahren zum Übertragen von zu einem Alphabet (A) gehörenden Informationssymbolen mittels akustischer Signale,
**dadurch gekennzeichnet, dass**
die Symbole mittels des Verfahrens zum Codieren von akustischen Signalen nach einem der Ansprüche 1 bis 7 codiert werden, wobei die akustischen Signale, die aufeinanderfolgenden Informationssymbolen entsprechen, sequentiell auf dem Übertragungskanal übertragen werden.

**9.** Verfahren zum Übertragen von zu einem Alphabet (A) gehörenden Informationssymbolen mittels akustischer Signale,
**dadurch gekennzeichnet, dass**
die Symbole mittels des Verfahrens zum Codieren nach einem der Ansprüche 1 bis 7 codiert werden, wobei eine Vielzahl von akustischen Signalen, die verschiedenen Informationssymbolen entsprechen, gleichzeitig auf dem Übertragungskanal übertragen werden.

**10.** Verfahren zum Übertragen von Informationssymbolen nach Anspruch 8 oder 9,
**dadurch gekennzeichnet, dass**
eine Blockkanalcodierung der Symbole wird vor ihrer Codierung durch akustische Signale erfolgt.

**11.** Verfahren zum Empfangen von Informationssymbolen, die mit dem Übertragungsverfahren nach Anspruch 8 übertragen werden,
**dadurch gekennzeichnet, dass**
das während einer Symbolzeit empfangene akustische Signal von einem Wandler in ein elektrisches Signal umgewandelt und dann mit jedem der Zufallssignale des Codierungsverzeichnisses korreliert wird, um eine Vielzahl von Korrelationsergebnissen bereitzustellen, wobei das im Absolutwert höchste Korrelationsergebnis einen Index eines während dieser Symbolzeit empfangenen Symbols liefert.

**12.** Verfahren zum Empfangen von Informationssymbolen, die mit dem Übertragungsverfahren nach Anspruch 9 übertragen werden,
**dadurch gekennzeichnet, dass**
das während einer Symbolzeit empfangene akustische Signal von einem Wandler in ein elektrisches Signal umgewandelt und dann mit jedem der Zufallssignale des Codierungsverzeichnisses korreliert wird, um eine Vielzahl von Korrelationsergebnissen bereitzustellen, wobei die Korrelationsergebnisse, die im Absolutwert höher als ein vorbestimmter Schwellenwert sind, die Indizes der während dieser Symbolzeit empfangenen Symbole liefern.

**13.** Verfahren zum Empfangen von Informationssymbolen, die mit dem Übertragungsverfahren nach Anspruch 10 übertragen werden,
**dadurch gekennzeichnet, dass**
das während einer Symbolzeit empfangene akustische Signal von einem Wandler in ein elektrisches Signal umgewandelt und dann mit jedem der Zufallssignale des Codierungsverzeichnisses korreliert wird, um eine Vielzahl von Korrelationsergebnissen bereitzustellen, wobei die Korrelationsergebnisse, die im Absolutwert höher als ein vorbestimmter Schwellenwert sind, die Indizes der während dieser Symbolzeit empfangenen Symbole liefern, wobei die empfangenen Symbolblöcke dann einer Kanaldecodierung unterzogen werden.

## Claims

1. Method for coding information symbols belonging to an alphabet (A) by means of acoustic signals, **characterised in that**:

   (a) a set of random signals is acquired and they are filtered by means of a filter of interest (110-120; 210-220) having for response the response of the transmission channel on which these signals are intended to be transmitted;
   (b) sub-sets ($S_N$) of $N$ random signals thereby filtered of said set are selected (150, 250) and, for each sub-set, a correlation matrix of the signals thereby selected is calculated (160, 260);
   (c) the sub-set of $N$ signals corresponding to the correlation matrix the closest to a diagonal matrix is retained as coding dictionary (170-180,270-280);
   (d) each information symbol of the alphabet is coded by a random signal of the dictionary, said random signal of the dictionary being transformed into an acoustic signal by means of a transducer.

2. Method for coding according to claim 1, **characterised in that** said random signals are acquired by means of a random generator using a physical phenomenon.

3. Method for coding according to claim 1 or 2, **characterised in that** at step (c):

   (c1) a new random signal belonging to said set is successively substituted (150, 250) by one of the random signals ($\overline{s}_i$, $\tilde{s}_i$) of a first selected sub-set of signals;
   (c2) the correlation matrix ($\mathbf{C}_{i\to k}$, $\mathbf{C'}_{i\to k}$) of the random signals is calculated (160, 260) for each of the sub-sets thereby substituted and a quality factor ($Q_{i\to k}$,$Q'_{i\to k}$) characterising the proximity of the correlation matrix to a diagonal matrix is deduced therefrom;
   the steps (c1) and (c2) being repeated as long as the random signals of said set have not been exhausted and/or the quality factor is below a predetermined threshold value ($Q_{Th}$, $Q'_{Th}$).

4. Method for coding according to claim 1, **characterised in that**, prior to step (b), from each random signal is subtracted its average so that said random signals are centred.

5. Method for coding according to claim 4, **characterised in that** the quality factor is calculated by means of $$Q' = \frac{\min_i\left(\left|C'_{ii}\right|\right)}{\max_{\substack{i,j\\ i\neq j}}\left(\left|C'_{ij}\right|\right)}$$ or $$Q' = \min_i\left(\frac{\left|C'_{ii}\right|}{\max_{j\neq i}\left(\left|C'_{ij}\right|\right)}\right)$$ or instead $$Q' = \frac{\operatorname{moy}_i\left(\left|C'_{ii}\right|\right)}{\operatorname{moy}_{\substack{i,j\\ i\neq j}}\left(\left|C'_{ij}\right|\right)}$$ where the coefficients $C'_{ij}$ are the elements of the correlation matrix and where min, max and moy signify respectively the minimum value, the maximum value and the average value.

6. Method for coding according to claim 4, **characterised in that**, prior to step (b), the energy of the centred random signals is normalized so as to obtain normalized random signals all having a same average energy per sample ($E_0$).

7. Method for coding according to claim 6, **characterised in that** the quality factor is calculated by means of $$Q = \frac{E_0}{\max_{\substack{i,j\\ i\neq j}}\left(\left|C_{ij}\right|\right)}$$ or $$Q = \frac{E_0}{\operatorname{moy}_{\substack{i,j\\ i\neq j}}\left(\left|C_{ij}\right|\right)}$$ or instead $$Q = \frac{E_0}{\sum_{\substack{i,j\\ i\neq j}}\left|C_{ij}\right|}$$ where the coefficients $C_{ij}$ are the elements of the correlation matrix and $E_0$ is said average energy per sample of the random signals and where min, max and moy signify respectively the minimum value, the maximum value and the average value.

8. Method for transmitting information symbols belonging to an alphabet (A) by means of acoustic signals, **characterised in that** said symbols are coded by means of the method for coding by acoustic signals according to one of claims 1 to 7, the acoustic signals corresponding to successive information symbols being transmitted sequentially on the transmission channel.

9. Method for transmitting information symbols belonging to an alphabet (A) by means of acoustic signals, **characterised in that** said symbols are coded by means of the method for coding according to one of claims 1 to 7, a plurality of acoustic signals corresponding to different information symbols being transmitted simultaneously on the transmission channel.

10. Method for transmitting information symbols according to claim 8 or 9, **characterised in that** a channel coding of blocks of said symbols is carried out prior to their coding by acoustic signals.

11. Method for receiving information symbols transmitted by the method for transmitting of claim 8, **characterised in that** the acoustic signal received during a symbol time is transformed into an electrical signal by a transducer, then correlated with each of the random signals of the coding dictionary to provide a plurality of correlation results, the highest correlation result in absolute value providing the index of a symbol received during said symbol time.

12. Method for receiving information symbols transmitted by the method for transmitting of claim 9, **characterised in that** the acoustic signal received during a symbol time is transformed into an electrical signal by a transducer, then correlated with each of the random signals of the coding dictionary to provide a plurality of correlation results, the correlation results above, in absolute value, a predetermined threshold value providing the indices of the symbols received during said symbol time.

13. Method for receiving information symbols transmitted by the method for transmitting of claim 10, **characterised in that** the acoustic signal received during a symbol time is transformed into an electrical signal by a transducer, then correlated with each of the random signals of the coding dictionary to provide a plurality of correlation results, the correlation results above, in absolute value, a predetermined threshold value providing the indices of the symbols received during said symbol time, the blocks of symbols received next being subjected to a channel decoding.

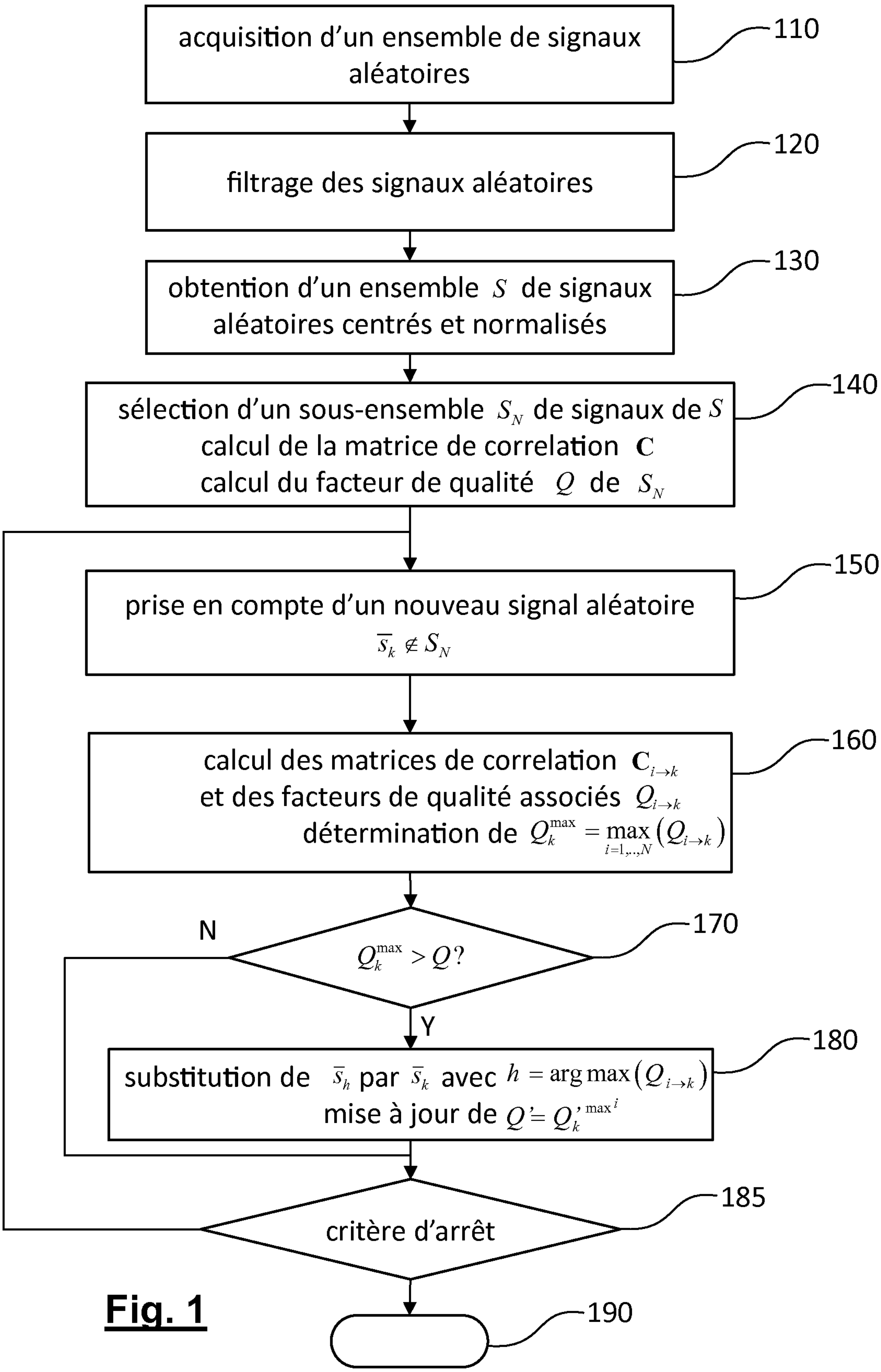
acquisition d'un ensemble de signaux aléatoires
110
filtrage des signaux aléatoires
120
obtention d'un ensemble $S$ de signaux aléatoires centrés et normalisés
130
sélection d'un sous-ensemble $S_N$ de signaux de $S$
calcul de la matrice de correlation $\mathbf{C}$
calcul du facteur de qualité $Q$ de $S_N$
140
prise en compte d'un nouveau signal aléatoire
$\bar{s}_k \notin S_N$
150
calcul des matrices de correlation $\mathbf{C}_{i \to k}$
et des facteurs de qualité associés $Q_{i \to k}$
détermination de $Q_k^{\max} = \max_{i=1,..,N} (Q_{i \to k})$
160
N
$Q_k^{\max} > Q?$
170
Y
substitution de $\bar{s}_h$ par $\bar{s}_k$ avec $h = \arg\max (Q_{i \to k})$
mise à jour de $Q' = Q_k'^{\max i}$
180
critère d'arrêt
185
190

Fig. 1

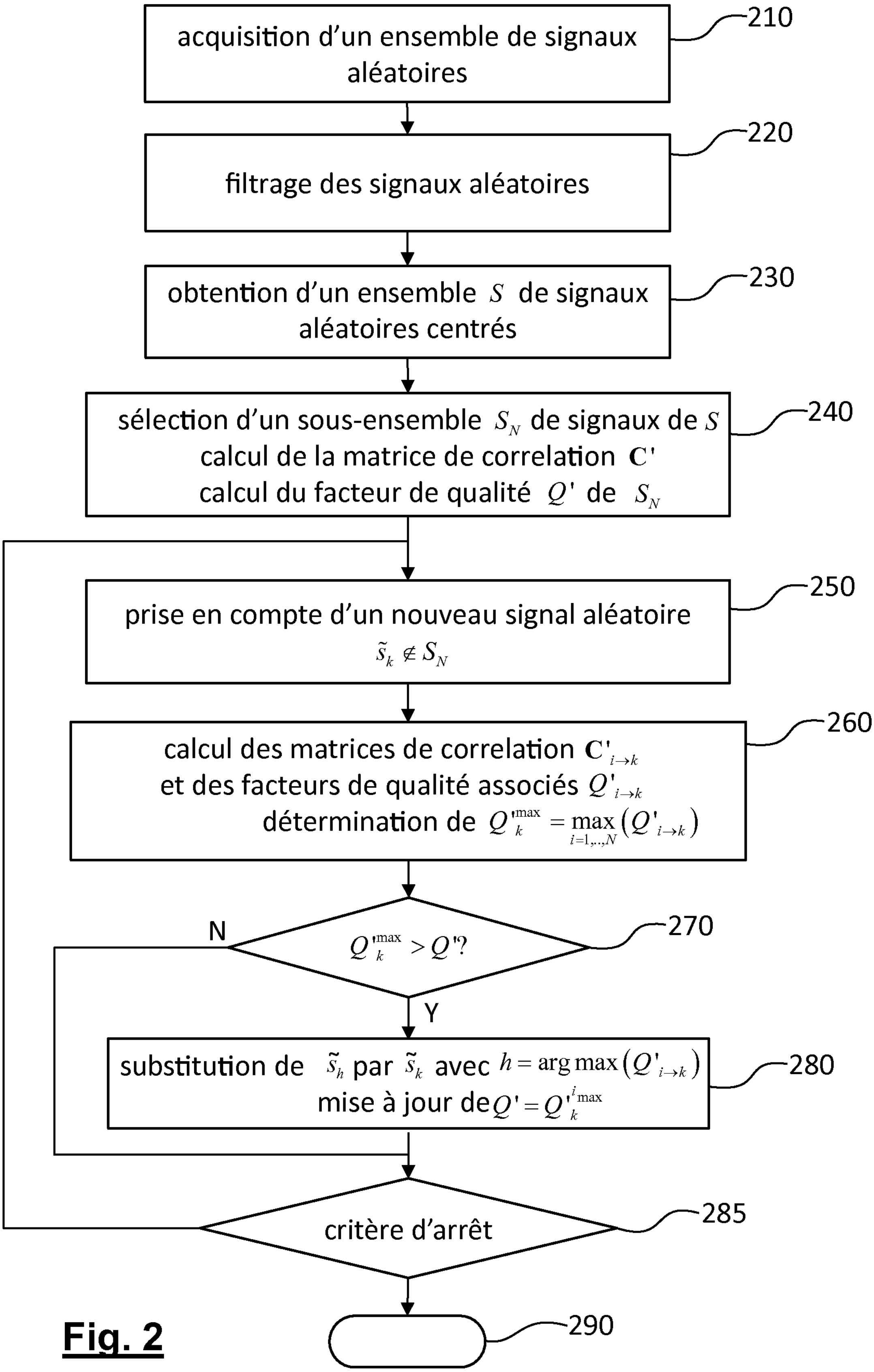
acquisition d'un ensemble de signaux aléatoires
210
filtrage des signaux aléatoires
220
obtention d'un ensemble $S$ de signaux aléatoires centrés
230
sélection d'un sous-ensemble $S_N$ de signaux de $S$
calcul de la matrice de correlation $\mathbf{C}'$
calcul du facteur de qualité $Q'$ de $S_N$
240
prise en compte d'un nouveau signal aléatoire $\tilde{s}_k \notin S_N$
250
calcul des matrices de correlation $\mathbf{C}'_{i\to k}$
et des facteurs de qualité associés $Q'_{i\to k}$
détermination de $Q'^{\max}_k = \max_{i=1,..,N}\left(Q'_{i\to k}\right)$
260
$Q'^{\max}_k > Q'$?
270
N
Y
substitution de $\tilde{s}_h$ par $\tilde{s}_k$ avec $h = \arg\max\left(Q'_{i\to k}\right)$
mise à jour de $Q' = Q'^{i\max}_k$
280
critère d'arrêt
285
290

**Fig. 2**

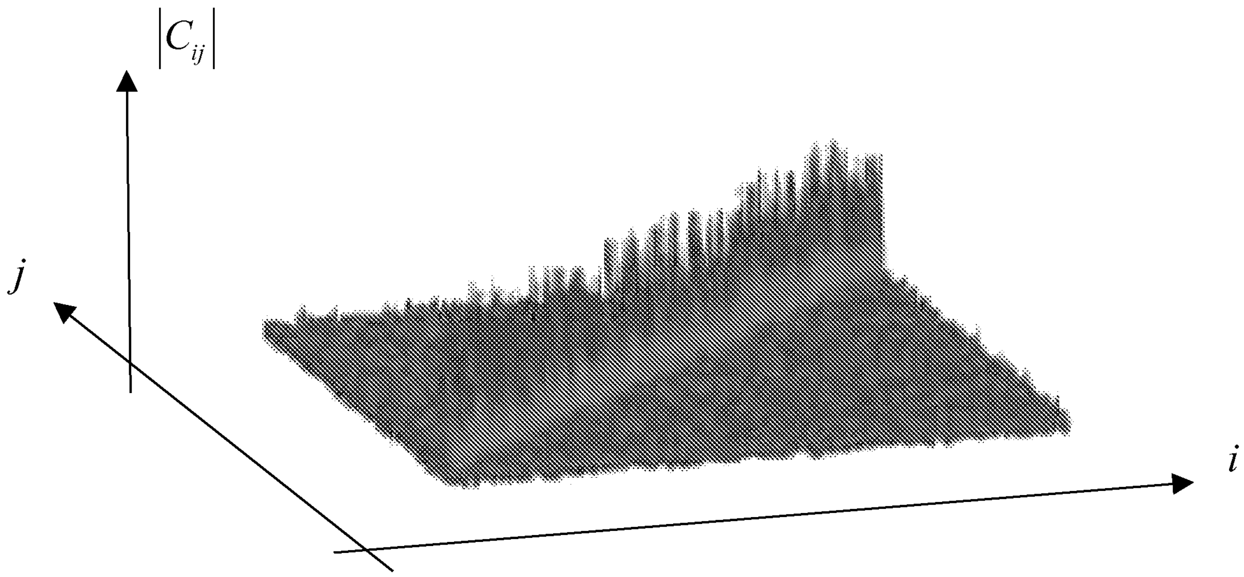


Fig. 3

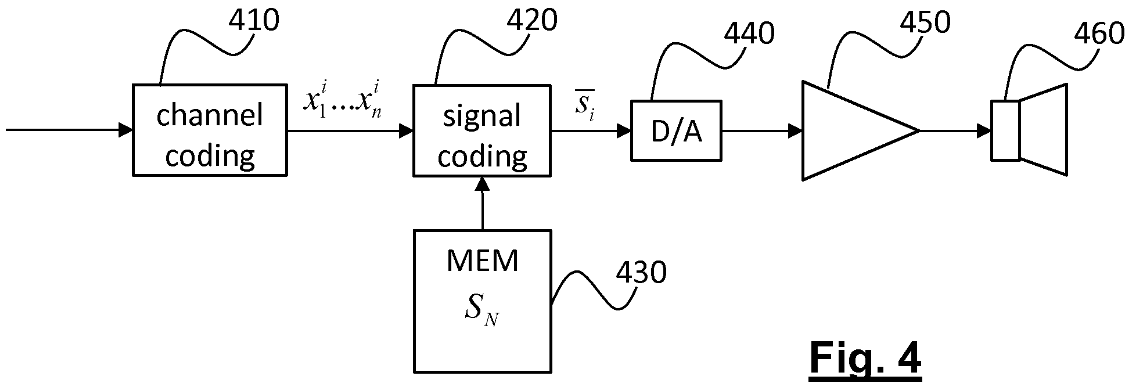
410
channel coding
$x_1^i \ldots x_n^i$
420
signal coding
$\overline{s}_i$
440
D/A
450
460
MEM
$S_N$
430

Fig. 4

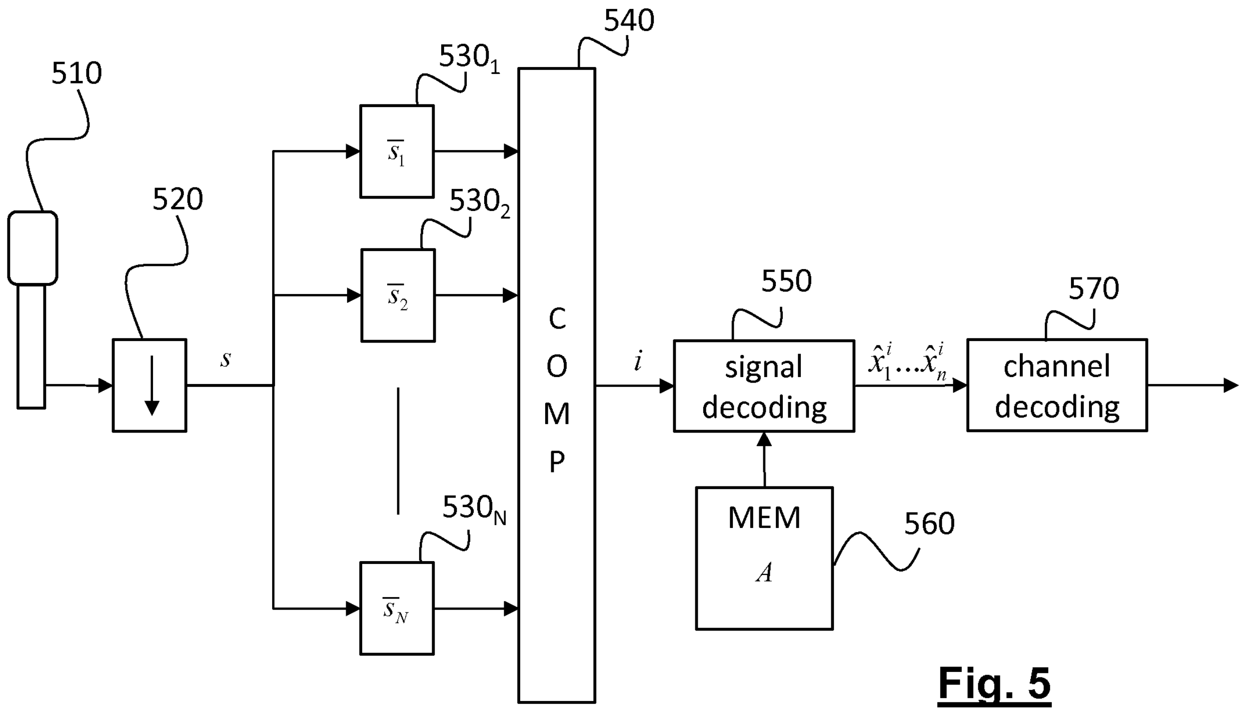
510
520
s
$530_1$
$\overline{s}_1$
$530_2$
$\overline{s}_2$
$530_N$
$\overline{s}_N$
540
C O M P
i
550
signal decoding
$\hat{x}_1^i \ldots \hat{x}_n^i$
570
channel decoding
MEM
A
560

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6751303 B
- US 2004008108078 A